# EUROPEAN PATENT SPECIFICATION

(11) **EP 2 408 692 B1**
(45) Date of publication and mention of the grant of the patent: **24.08.2016**
(21) Application number: 10753170.9
(22) Date of filing: 17.03.2010
(51) Int. Cl.: B65D 85/66, B65D 88/12, B65D 90/00

(54) **TRANSPORT ARRANGEMENT**
TRANSPORTEINRICHTUNG
ARRANGEMENT DE TRANSPORT

(30) Priority: 18.03.2009 FI 20095280
(43) Date of publication of application: 25.01.2012
(73) Proprietor: Oy Langh Ship Ab, 21500 Piikkiö (FI)
(72) Inventor: LANGH, Hans, FI-21500 Piikkiö (FI)
(74) Representative: Kolster Oy Ab
(86) International application number: PCT/FI2010/050204
(87) International publication number: WO 2010/106229

(56) References cited:
- EP-A1- 1 174 367
- WO-A1-03/000544
- WO-A1-2004/033346
- DD-A1- 71 131
- DE-A1- 1 952 581
- DE-A1- 19 610 374
- JP-U- 60 099 292

## Description

### Background of the invention

The invention relates to a transport arrangement for transporting material and/or piece goods.

Typically transport frames, such as containers, used in sea transports are supported and fastened to the transport base at their corners. Thus, the weight of the transport frame is directed to certain point-form locations in the transport base. In addition, high loads are directed to the locking arrangement of the frame at high seas, for instance.

Publication WO 2008/142202 discloses a solution, in which the bottom structure of a transport frame comprises a flexible support surface for supporting the frame against a deck in the cargo space of a ship, whereby the rigidity of the frame is dimensioned in such a manner that the bottom structure of the frame is arranged to flex elastically to an extent that allows the bottom structure of the frame to bend against the deck and the flexible support surface to form a pressure equalisation surface against the deck when the frame is loaded with reels. This way, the weight of the frame and its cargo can be distributed in such a manner that it also loads the deck at other locations than just the fastening points. The pressure equalisation surface that is in contact with the ship's deck also acts as a friction surface, thus reducing the loads directed to the locking arrangement of the frame. However, the solution requires that the bottom structure be arranged flexible and that the load of the frame is arranged at correct locations and suitable in size so that the frame bends in the required manner. Document WO 03/000544 A1 discloses a transport platform for shipping heavy cargo.

### Brief description of the invention

It is an object of the invention to provide a novel transport arrangement.

The transport arrangement of the invention is characterised by the features of claim 1.

The idea of the invention is that at each bottom corner of the transport frame a high enough notch is formed that when the frame is placed on top of locking clamps, the bottom of the transport frame settles without bending against the mounting base at least at some location. The load caused by the transport frame and the transported goods or material loaded thereon is then partially also distributed against the mounting base and not only to the corners of the transport frame. The loads directed to the corners of the transport frame can then be reduced and heavier cargo than before can be placed in the transport frame. The structure of the transport frame is on the whole simple and the solution is reliable.

### Brief description of figures

Some embodiments of the invention are described in greater detail in the attached drawings, in which
Figure 1 is a schematic side view of a transport container,
Figure 2 is a schematic view of the transport container of Figure 1 cut along line A-A of Figure 1,
Figure 3 is a schematic view of a bottom corner of a transport frame,
Figure 4 is a schematic view of a bottom corner of another transport frame, and
Figure 5 is a schematic view of a bottom corner of a third transport frame.

In the figures, some embodiments of the invention are shown simplified for the sake of clarity. Similar parts are marked with the same reference numbers in the figures.

### Detailed description of the invention

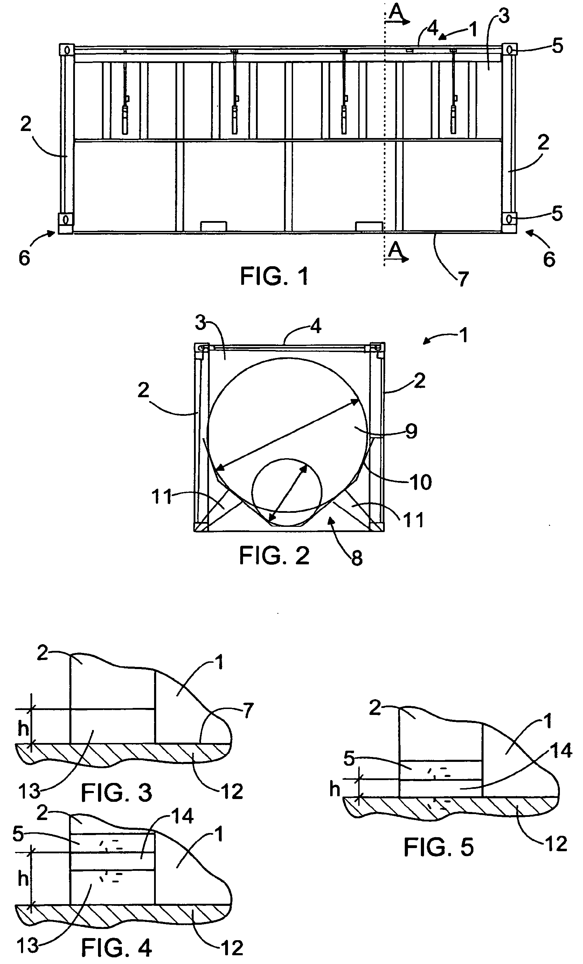

Figures 1 and 2 show a transport container having the dimensions of a standard 20-foot container. The length of the transport container 1 is thus 20 feet, that is, approximately 6.1 m. The width of the transport container 1 is 8 feet, that is, approximately 2.4 m, and the height of the transport container 1 is approximately 2.59 m. The presented solution may naturally also be applied to transport frames of other sizes, such as to 10-, 30-, 40-, 45-, or 53-foot transport containers or frames.

There are corner poles 2 at the corners of the transport container 1. Further, the transport container 1 is furnished with walls 3 and roof 4. The roof 4 is preferably detachable. One or more doors may be arranged to the walls 3.

A corner casting 5 is arranged to the top and bottom ends of the corner poles 2. Thus, the transport container 1 may be fastened to a mounting base. The mounting base may be a ship's tween-deck or the bottom of the cargo space of a ship or the cargo deck of a ship. Thus, the transport frame is then arranged for use in sea tranports. Further, the mounting base may be a pallet or deck or a corresponding mounting base of another transport means, such as train or truck. The fastening arrangement has a locking clamp that is a twist lock. Further, it is also possible to fasten superposed transport containers 1 to each other by means of the fastening arrangement described above.

The corner castings 5 at the bottom ends of the corner poles 2 are arranged higher than the bottom 7 of the transport container 1 in such a manner that the bottom ends of the corner poles have notches 6. The notch 6 is high enough to accommodate a locking clamp below the corner casting 5 of the bottom end of the corner pole 2 in such a manner that the bottom 7 of the transport frame 1 touches the mounting base so that the bottom of the transport frame 1 does not need to bend.

As shown in Figure 2, the transport container 1 comprises a trough 8 for reels 9. Therefore, the transport container may be called a transport frame for transporting reels. In this context, reels refer especially to heavy steel reels that are formed of coiled steel plates. Further, the reels may be any structurally cylindrical pieces, such as paper reels. The weight of a reel is typically 10 to 25 tons, but it may be even heavier than this.

The trough 8 forms a cradle for the reels 9 and forms a uniform surface that extends along the length of the transport container 1. The side walls 10 of the trough 8 form support surfaces that provide lateral support for the reels 9. The side walls 10 of the trough are designed to provide optimum support for reels of different sizes, which the circles of various sizes drawn in the figure illustrate. The diameter of the largest circle is approximately 2100 mm and that of the smallest is approximately 900 mm. The side walls 10 of the trough are initially at an approximately 100° angle to each other and finally at an approximately 40° angle to each other. The degrees may also differ from these and they may be defined according to the shape and size of the reel. The shape and height of the side walls 10 of the trough are arranged such that the reel 9 remains in the cradle even without fastening lines.

Two longitudinal supports below the trough 8 are marked with reference number 11 in Figure 2. The longitudinal supports 11 extend from one end of the transport container 1 to the other. The weight caused by the reels 9 is transmitted from the longitudinal supports 11 to the bottom structure of the transport container 1. There may also be transverse supports below the trough 8. The trough 8 may be closed at the bottom and the side walls 10 may also be closed. This way, the transport container may be utilised to transport not only reels 9 but also bulk goods and material.

Figure 3 shows a solution not forming part of the present invention, in which the transport frame 1 is arranged on a mounting base 12 in such a manner that the corners of the transport frame 1 are placed at the transport protrusions 13 on top of the mounting base 12. The transport protrusions 13 are thus fixedly connected to the mounting base 12. The height h of the notch 6 in the corner of the transport frame 1 corresponds to the height of the transport protrusion 13. Thus, the corner pole 2 rests on the transport protrusion 13 and the bottom 7 of the transport container 1 is against the surface of the mounting base 12. In this case the transport container 1 has not been fastened to the transport protrusion but the transport frame 1 supports against the transport protrusions 13 in the lateral direction and remains in place under gravity.

Figure 4 shows an embodiment not forming part of the present invention, in which the bottom part of the corner of the transport frame 1 is equipped with a corner casting 5. Further, the transport frame is locked to the transport protrusion 13 with a locking clamp 14, such as twist lock. Thus, the height h of the notch 6 corresponds to the combined height of the transport protrusion 13 and locking clamp 14.

Figure 5 shows an embodiment in which the bottom corner of the transport frame 1 is also equipped with a corner casting 5 and the transport frame is locked to the mounting base 12 with locking clamps 14. However, there are no transport protrusions on top of the mounting base 12, whereby the height h of the notch 6 in the corner corresponds to the height of the locking clamp 14.

The present solution is also suitable for use with other transport frames than those intended for transporting reels. The transport frame may be a container or one differing from the container structure.

The present solution allows a higher load on the mounting frame than when it is loaded through just the fastening points of the transport frame. According to an example, a cargo deck may be loaded by 102 tons through the fastening points of a 40-foot transport frame. Instead, the same deck may be loaded by utilising its surface, that is, by distributing weight evenly on a certain area at 15 tons/m². In such a case, it is possible to load the surface area required by a 40-foot transport frame by approximately 430 tons. With the present solution, the weight of the cargo may be directed partly or even entirely against the mounting base instead of the fastening points, and thus the mounting base may be loaded more than before.

In some cases, the features disclosed in this patent application may be used as such, regardless of other features. On the other hand, the features disclosed in this patent application may, when necessary, be combined to form various combinations.

The drawings and the related description are only intended to illustrate the idea of the invention. The invention may vary in detail within the scope of the claims.

The bottom structure and/or the frame structure contacting the mounting base 12 of the transport frame 1 may be made flexible. The bottom structure may then touch an uneven mounting base 12 at some point, when the transport frame is empty, and bend to touch the mounting base at several points and/or over a wider area, when the transport frame 1 is loaded with reels or other goods.

## Claims

1. A transport arrangement for transporting material and/or piece goods, the transport arrangement comprising a mounting base (12) provided with twist locks (14) having a height, and a transport frame comprising a bottom (7), corner poles (2) at corners of the transport frame and corner castings (5) arranged to the top and bottom ends of the corner poles (2) for fastening the transport frame (1) to the mounting base (12) with the twist locks (14), **characterized in that** the corner castings (5) at the bottom ends of the corner poles (2) are arranged higher than the bottom (7) of the transport frame (1) such that a notch (6) is formed at each bottom corner of the transport frame (1) below the corner casting (5) to accomodate the twist lock (14), the notch (6) having a height (h) corresponding the height of the twist lock (14), whereby, when the transport frame (1) is placed on top of the twist locks (14), the bottom (7) of the transport frame (1) touches the mounting base (12) so that the bottom (7) of the transport frame (1) does not need to bend, whereby a load caused by the transport frame and the transported goods is partially distributed against the mounting base (12).

2. A transport arrangement as claimed in claim 1, **characterised in that** the transport frame (1) is a transport container.

3. A transport arrangement as claimed in any one of the preceding claims, **characterised in that** the transport frame (1) comprises a support frame and trough (8) for receiving at least one reel (9) and supporting it in the lateral direction.

4. A transport arrangement as claimed in claim 3, **characterised in that** the trough (8) is a trough in the longitudinal direction of the transport frame (1) and extends from one end of the transport frame (1) to the other.

5. A transport arrangement as claimed in any one of the preceding claims, **characterised in that** the transport frame is arranged to be used in sea transports.

## Patentansprüche

1. Transporteinrichtung zum Transportieren von Material und/oder Stückgütern, wobei die Transporteinrichtung eine Aufbauplatte (12), welche mit Drehschlössern (14) mit einer Höhe versehen ist, sowie einen Transportrahmen umfasst, der einen Boden (7), Eckschäfte (2) an Ecken des Transportrahmens und Eckbeschläge (5) umfasst, die an den oberen und unteren Enden der Eckschäfte (2) zum Befestigen des Transportrahmens (1) an der Aufbauplatte (12) mit den Drehschlössern (14) angeordnet sind, **dadurch gekennzeichnet, dass** die Eckbeschläge (5) an den unteren Enden der Eckschäfte (2) höher als der Boden (7) des Transportrahmens (1) angeordnet sind, so dass ein Einschnitt (6) an jeder Bodenecke des Transportrahmens (1) unterhalb des Eckbeschlags (5) gebildet ist, um das Drehschloss (14) aufzunehmen, wobei der Einschnitt (6) eine Höhe (h) aufweist, welche der Höhe des Drehschlosses (14) entspricht, wodurch, wenn der Transportrahmen (1) auf den Drehschlössern (14) platziert ist, der Boden (7) des Transportrahmens (1) die Aufbauplatte (12) berührt, so dass der Boden (7) des Transportrahmens (1) sich nicht biegen muss, wodurch eine durch den Transportrahmen und die transportierten Güter verursachte Belastung teilweise gegen die Aufbauplatte (12) verteilt ist.

2. Transporteinrichtung nach Anspruch 1, **dadurch gekennzeichnet, dass** der Transportrahmen (1) ein Transportbehälter ist.

3. Transporteinrichtung nach einem der vorhergehenden Ansprüche, **dadurch gekennzeichnet, dass** der Transportrahmen (1) einen Stützrahmen und eine Senke (8) umfasst, um zumindest eine Trommel (9) aufzunehmen und dieses in lateraler Richtung zu unterstützen.

4. Transporteinrichtung nach Anspruch 3, **dadurch gekennzeichnet, dass** die Senke (8) eine Senke in die Längsrichtung des Transportrahmen (1) ist und sich von einem Ende des Transportrahmens (1) zum anderen Ende erstreckt.

5. Transporteinrichtung nach einem der vorhergehenden Ansprüche, **dadurch gekennzeichnet, dass** der Transportrahmen dazu eingerichtet ist, beim Seetransport verwendet zu werden.

## Revendications

1. Agencement de transport pour transporter de la matière et/ou des marchandises à la pièce, l'agencement de transport comprenant une base de montage (12) munie de verrous tournants (14) ayant une certaine hauteur, et un châssis de transport comprenant un fond (7), des cornières (2) au niveau des angles du châssis de transport et des pièces coulées d'angle (5) agencées sur les extrémités supérieure et inférieure des cornières (2) pour attacher le châssis de transport (1) à la base de montage (12) avec les verrous tournants (14), **caractérisé en ce que** les pièces coulées d'angle (5) au niveau des extrémités de fond des cornières (2) sont agencées plus haut que le fond (7) du châssis de transport (1) de sorte qu'une encoche (6) est formée au niveau de chaque angle de fond du châssis de transport (1) au-dessous de la pièce coulée d'angle (5) pour loger le verrou tournant (14), l'encoche (6) ayant une hauteur (h) correspondant à la hauteur du verrou tournant (14), de sorte que, lorsque le châssis de transport (1) est placé sur le dessus des verrous tournants (14), le fond (7) du châssis de transport (1) touche la base de montage (12) de sorte que le fond (7) du châssis de transport (1) n'a pas besoin d'être plié, de sorte qu'une charge amenée par le châssis de transport et les marchandises transportées est partiellement répartie sur la base de montage (12).

2. Agencement de transport selon la revendication 1, **caractérisé en ce que** le châssis de transport (1) est un conteneur de transport.

3. Agencement de transport selon l'une quelconque des revendications précédentes, **caractérisé en ce que** le châssis de transport (1) comprend un châssis de support et une auge (8) pour recevoir au moins une bobine (9) et la supporter dans la direction latérale.

4. Agencement de transport selon la revendication 3, **caractérisé en ce que** l'auge (8) est une auge dans la direction longitudinale du châssis de transport (1) et s'étend d'une extrémité du châssis de transport (1) à l'autre.

5. Agencement de transport selon l'une quelconque des revendications précédentes, **caractérisé en ce que** le châssis de transport est agencé pour être utilisé dans des transports maritimes.
